# EUROPEAN PATENT SPECIFICATION

(11) **EP 2 331 394 B1**
(45) Date of publication and mention of the grant of the patent: **20.02.2013**
(21) Application number: 09819429.3
(22) Date of filing: 25.08.2009
(51) Int. Cl.: B63B 21/24

(54) **ANCHOR WITH MEASUREMENT COUPLING**
ANKER MIT MESSKUPPLUNG
ANCRE A SYSTEME D ACCOUPLEMENT DE MESURE

(30) Priority: 10.10.2008 NL 2002086
(43) Date of publication of application: 15.06.2011
(73) Proprietor: STEVLOS B.V., 2901 LB Capelle aan den IJssel (NL)
(72) Inventor: VAN DEN ENDE, David Peter, NL-2901 LB CAPELLE aan den IJSSEL (NL); RUINEN, Roderick Michael, NL-2901 LB CAPELLE aan den IJSSEL (NL)
(74) Representative: Geurts, Franciscus Antonius
(86) International application number: PCT/NL2009/050510
(87) International publication number: WO 2010/041929

(56) References cited:
- WO-A-2008/045788
- GB-A- 2 196 918
- US-A- 3 946 695
- US-A- 6 041 730

## Description

### BACKGROUND OF THE INVENTION

The invention relates to an anchor such as closest prior art document GB 2 196 918, particularly for anchoring heavy maritime objects, such as a drilling platform, into an anchoring ground for a long period of use that may last many years.

Such anchors at an anchoring line are placed onto the anchoring ground from an installation ship, after which the installation ship pulls at the anchor line to bring the anchor into the anchoring ground. During pulling the pulling force on the anchor line is measured from the installation ship. The pulling force and the pulling path of the installation ship then form a parameter for the penetration path of the anchor and the expected holding force the anchor will be able to provide.

Owners of heavy maritime objects make high demands on the degree of reliability of the expected holding force. Therefore it has to be ruled out that a considerable component of the pulling force measured on the installation ship is for instance caused by obstacles that have engaged onto the anchor line during the insertion of the anchor.

It is an object of the invention to provide an anchor with which the penetration path of the anchor and the expected holding force can be established to an acceptable degree.

### SUMMARY OF THE INVENTION

The invention provides an anchor comprising a fluke which can be introduced into an anchoring ground in accordance with a direction of penetration by exerting a pulling force on an anchor line connected to the anchor, and a measuring coupling which during introduction of the fluke forms part of a force transfer between the anchor line and the fluke, wherein the measuring coupling is provided with a first coupling member that is connected to the fluke, a second coupling member that is connected to the anchor line, a hollow coupling bar that couples the coupling members to one another, wherein the coupling members in the longitudinal direction of the bar engage onto the coupling bar at different places in order to be able to deform it, and a measuring body extending through the hollow coupling bar and which at least at its ends is connected to the coupling bar in order to deform along with the coupling bar, wherein the measuring body is provided with deformation sensors for recording deformation parameters of the measuring body.

The coupling bar deforms, particularly bends, depending on the forces exerted on the coupling bar by the first and second coupling member. Said deformation is applied onto the measuring body, which deformation is recorded by the deformation sensors. Therefore the deformation recorded by the deformation sensors is a parameter for the action of forces between the first and second coupling member as performed at the anchor side of the anchor line, that means independent of forces that may act on the anchor line by obstacles. In that way the expected holding force of the anchor can be predicted with a high degree of reliability. The relation between the action of forces and the deformations can be determined on the basis of interpolation of test data obtained earlier, or be calculated according to the rules of mechanics, for instance by means of a finite element analysis.

In one embodiment the measuring body is fixedly connected to the coupling bar, as a result of which deformations of the coupling bar can be imposed directly and proportionally onto the measuring body.

In one embodiment the measuring body extends freely through the coupling bar between the ends connected to the coupling bar, as a result of which the measuring body can easily be inserted in the cavity in the coupling bar.

The cavity in the coupling bar may be defined by a straight bore through the coupling bar. In a freely extending embodiment the measuring body may be narrower over its length between the ends than it is at its ends.

In one embodiment the measuring body comprises at least one elongated strip or plate. Due to its shape a strip or plate is suitable for mechanical calculations.

In one embodiment the measuring body comprises at least two elongated strips or plates which over their length are positioned substantially transverse to each other. The position transverse to each other offers the possibility to analyse the deformations according to a Cartesian coordinate system.

In a simple embodiment the strips are fixedly connected to one another.

In one embodiment the strips in cross-section form a cross. The deformation sensors can then be provided on all legs of the cross for an exact determination of the deformation of the coupling bar.

In one embodiment the measuring body is made of metal, preferably steel.

In one embodiment the deformation sensors are grouped in at least one straight series extending substantially transverse to the longitudinal direction of the measuring body. The deformation of the measuring body can then be recorded over a large part of its width including deformation differences over the length of the series, which renders an accurate determination of the deformation of the measuring body in its entirety and thus the coupling bar possible.

In one embodiment thereof the deformation sensors are grouped in several straight series distributed over the measuring body in the longitudinal direction of the measuring body, so that the deformation at several locations distributed over the length over a large part of the width of the measuring body can be recorded.

In one embodiment the measuring coupling comprises two first coupling members that spaced apart from each other, engage onto the coupling bar. The first coupling members connected to the fluke are able to load the coupling bar to bend in cooperation with the second coupling member, as a result of which the bending and its specific bending shape is a parameter for the force the anchor line exerts on the fluke, and for the direction of said force. Likewise the measuring coupling may comprise two second coupling members that spaced apart from each other, engage onto the coupling bar.

In one embodiment the two first coupling members or the two second coupling members within the measuring coupling form the outermost engagement onto the coupling bar. In between them the other or other coupling members can engage to load the coupling bar to bend.

In one embodiment the anchor comprises a shank that is fixedly connected to the fluke, wherein the first coupling member forms a part of the shank, wherein the first coupling member preferably is situated at the end of the shank that faces away from the fluke.

In one embodiment thereof the coupling bar, regarding its rotation, is fixedly connected to the shank, as a result of which the direction of a force exerted on the coupling bar by the second coupling member can be related to the shank and the fluke.

In one embodiment the second coupling member forms the end of an anchor line coupling connected to the anchor line. The anchor line coupling may for instance be a bow shackle that can be swung about the coupling bar.

The direction of penetration and thus the penetration forces will be substantially parallel to the longitudinal plane of symmetry of the anchor. In one embodiment the coupling bar in its longitudinal direction therefore extends transverse to the longitudinal plane of symmetry of the anchor, as a result of which the coupling bar extending transverse to the longitudinal plane of symmetry can be properly loaded to bend in order to determine the action of forces.

In one embodiment the measuring coupling is furthermore provided with an inclinometer that is accommodated in the coupling bar, so that in addition to the action of forces on the coupling bar also tiltings of the coupling bar with respect to a notional plane can be determined, which is a parameter for the pitch and roll of the anchor.

In one embodiment the measuring coupling is provided with an accelerometer that is accommodated in the coupling bar, so that by means of integration of the momentary acceleration in time the path of the coupling bar can be determined, which is a parameter for the penetration path of the anchor in the anchoring ground.

In one embodiment the measuring coupling is provided with a pressure sensor for recording the water pressure at the location of the measuring coupling. The water pressure is a parameter for the depth of the anchor with respect to the water line, from which the depth in the anchoring ground can be derived. In combination with for instance the pitch the horizontal component of the anchoring path may also be derived from the depth.

The data of the said measuring equipment can be processed and interpreted remote from the anchor, for instance from an installation ship, when the measuring coupling comprises an electronic circuit that is coupled to the deformation sensors, and preferably to the inclinometer and/or accelerometer and/or the pressure sensor, wherein the electronic circuit is adapted for processing and transmitting measurement data therefrom to a remote calculation and processing unit.

The inclinometer, the accelerometer and/or the electronic circuit may be placed in the hollow coupling bar as one prefab unit with the measuring body and be attached there when they are fixedly connected to the measuring body.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached drawings, in which:
Figure 1 shows an isometric front view of an anchor according to the invention, connected to an anchor line by means of a measuring coupling;
Figure 2 shows a side view of the anchor according to figure 1, introduced into an anchoring ground;
Figures 3A-3D shows a longitudinal section, a cross-section and details of the measuring coupling according to figures 1 and 2;
Figures 4A-4C show examples of the action of forces on the measuring coupling according to the preceding figures, during the introduction of the anchor in the anchoring ground.

### DETAILED DESCRIPTION OF THE DRAWINGS

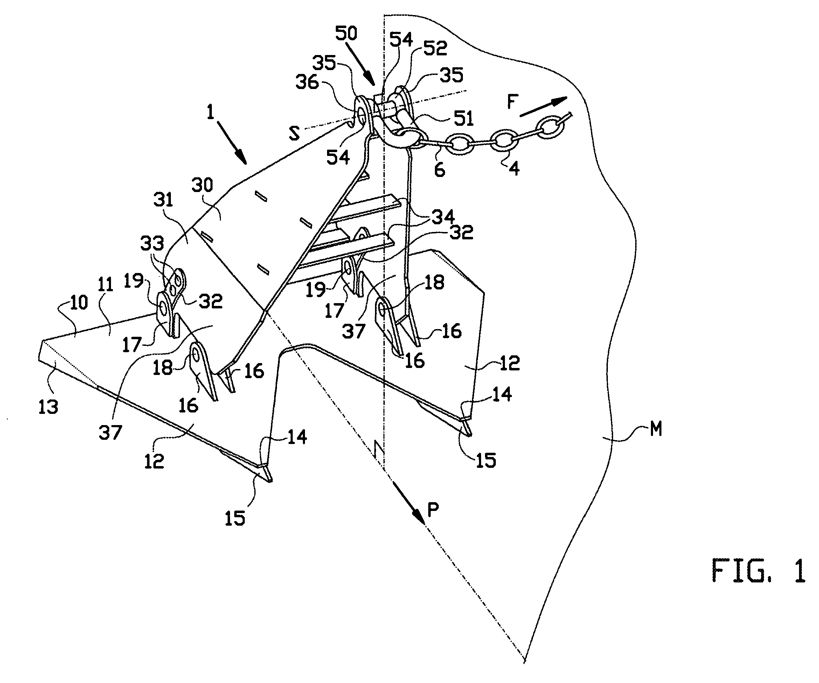

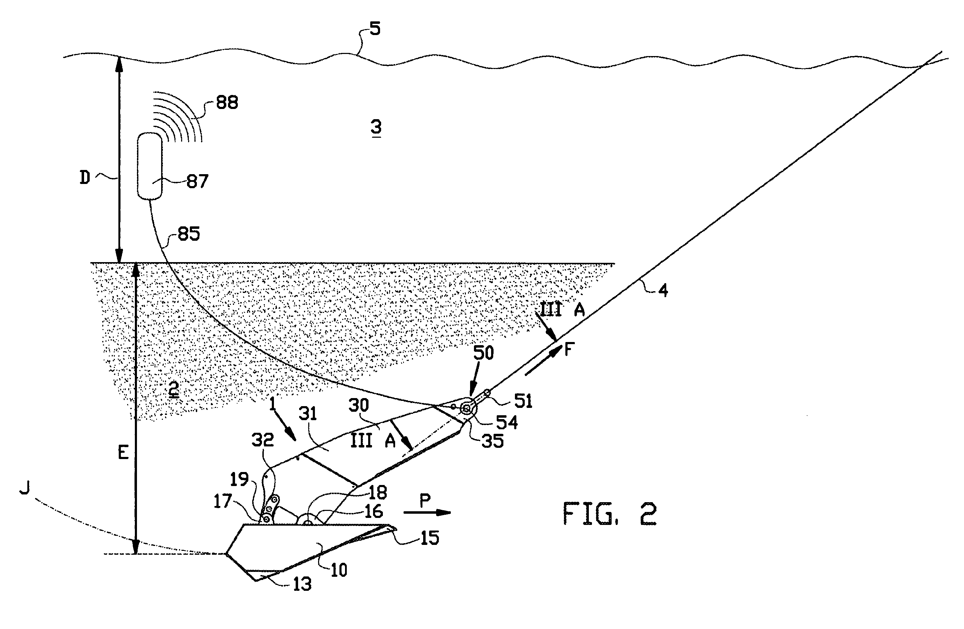

Figures 1 and 2 show a steel anchor 1 according to an embodiment of the invention. The anchor 1 is intended for anchoring heavy maritime objects, such as a drilling platform that is not further shown, in an anchoring ground 2, for a long period of use that may last many years. The anchor 1 comprises a fluke 10 and a shank 30 which with respect to the fluke 10 inclines obliquely forward and which at its end is provided with a measuring coupling 50 with which the anchor 1 is connected to an anchor line 4. The anchor 1 is substantially symmetrical with respect to its longitudinal plane of symmetry M. The anchor 1 is formed for in a forward direction of penetration P being introduced into the anchoring ground 2 substantially parallel to the longitudinal plane of symmetry M.

The fluke 10 is built up using plate members, and at its rear side comprises a base plate 11 over its width, which base plate on both sides of the centre longitudinal plane M merges into two triangular front ends 12. On both sides of the base 11 two downwardly oriented side plates 13 are provided which extend parallel to each other, and below the front ends 12 two parallel longitudinal girders 15 extend from the tips 14. At the upper side the fluke 10 is provided with upright securing lips 16, 17 having securing pins 18, 19 for the shank 30.

The shank 30 is built up with two plate-shaped shank legs 31 which in upward direction taper obliquely towards each other. The shank legs 31 are connected to each other along their length by means of transverse plates 34. At their lower side, the shank legs 31 have a bent portion 37 which is accommodated between the securing lips 16, 17, wherein the securing pins 18, 19 extend through fixing holes that are not shown in the bent portions 37. At the rear side the fixing holes are formed in a reinforced part 32 on the bent portion 37, which reinforced part 32 is provided with a series of extra holes 33 for adjusting the angle between the fluke 10 and the shank 30. At the upper end, the shank legs 31 are provided with end ears 35 extending parallel to each other and having fixing holes 36 for a measuring coupling 50 to the anchor line 4.

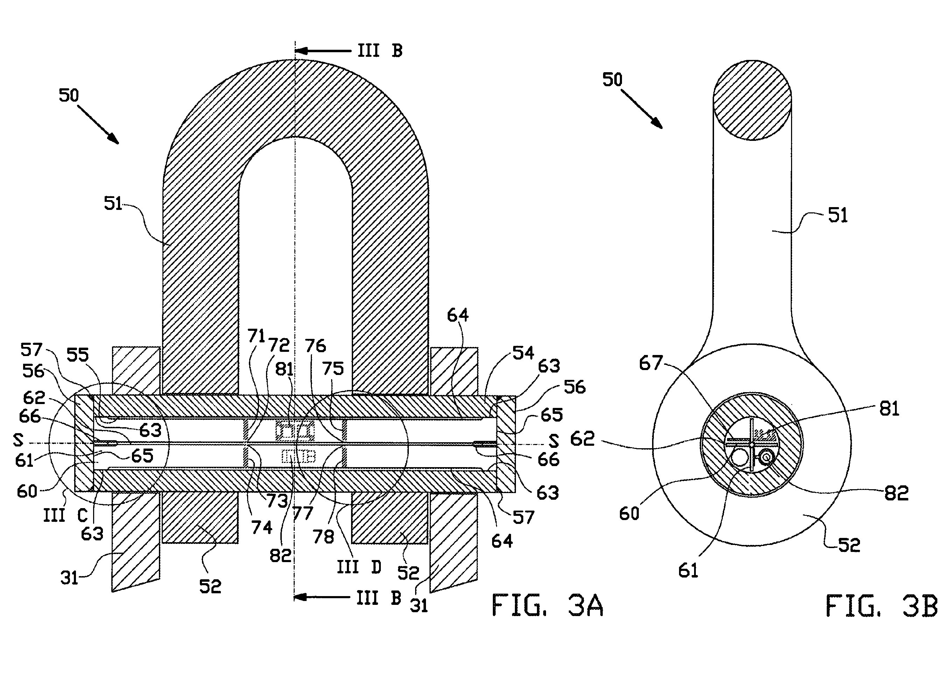

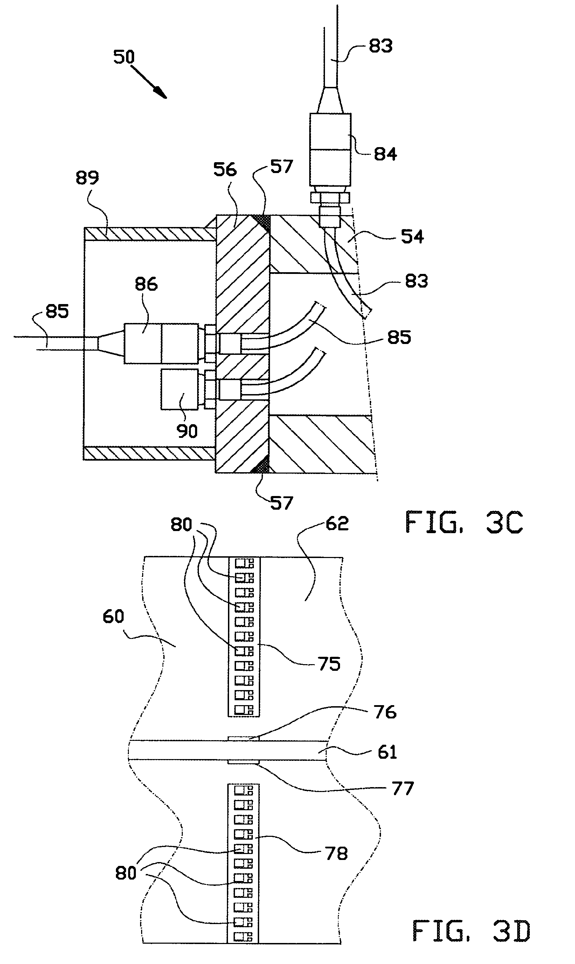

The measuring coupling 50 is also shown in detail in figures 3A-3D, and comprises a straight, cylindrical steel connecting pen 54 which extends through the fixing holes 36 of the end ears 35. The centre line S of the connecting pen 54 is oriented substantially perpendicular to the longitudinal plane of symmetry M. Between the end ears 35 the connecting pen 54 also extends through the eyes 52 of a bow shackle 51 coupled to the anchor line 4. The connecting pen 54 is accommodated under positive tolerances in the fixing holes 36 and the eyes 52, wherein an indexation that is not further shown is provided and which counteracts rotation of the connecting pen 54 about its centre line S with respect to the shank 30. The bow shackle 51 is able to swing about the connecting pen 54 in the longitudinal plane of symmetry M.

The connecting pen 54 is provided with a cylindrical bore or inner space 55 which at the ends is closed off with end caps 56 which are welded together all round by means of a weld 57, as a result of which the inner space 55 is closed off watertight. In the inner space 55 an elongated measuring body 60 is confined.

The measuring body 60 comprises an elongated vertical steel plate 61 and a horizontal elongated steel plate 62 having a substantially constant thickness. The steel plates 61, 62 are identical in this example. The plates 61, 62 are both provided with two straight head end edges 65 which via four straight longitudinal end edges 63 merge into two straight longitudinal side edges 64 that are receded therefrom and which form a narrowing of the respective plate 61, 62 with respect to the longitudinal end edges 63. The plates 61, 62 are both provided with a centre slot 66 which from one of the head end edges 65 extends over half the length of the respective plate 61, 62 after which the plates 61, 62 have been inserted in each others centre slot 66 and welded together over the full length. The measuring body 60 therefore has a shape-retaining prismatic shape wherein the cross-section over the length is perpendicularly cross-shaped. Due to the said longitudinal weld the ribs of the cross are rigidly connected to each other.

The head end edges 65 and the longitudinal end edges 63 of the measuring body 60 abut the boundary wall 58 of the inner space 55 and the inner surface 59 of the end caps 56, respectively, wherein between the longitudinal end edges 63 and the boundary wall 58 a weld has been made in order to fixedly connect it to the connecting pen 54. As a result an elastic deformation of the connecting pen 54 at the ends is applied on the measuring body 60 whereas it remains free from the boundary wall 58 over the narrowing defined by the longitudinal side edges 64.

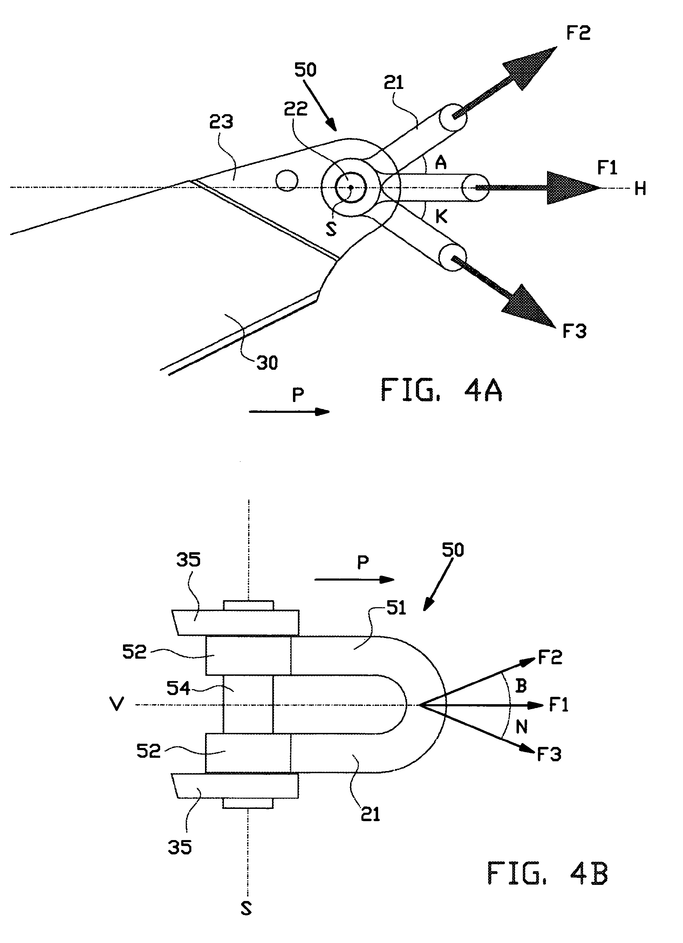

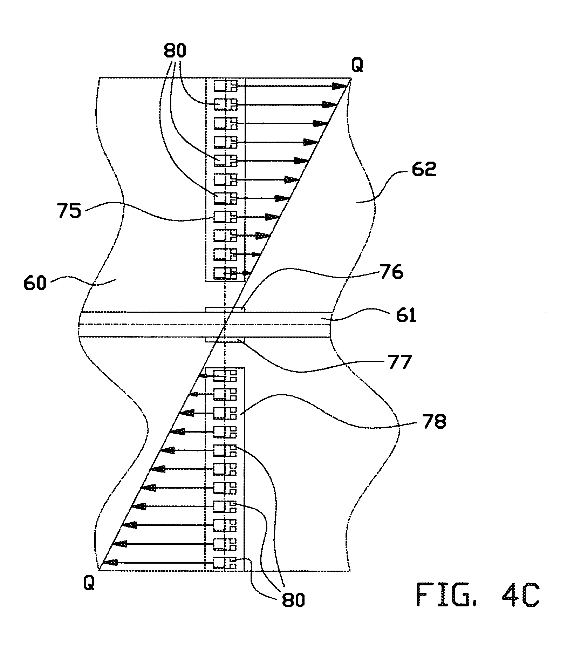

As shown in figures 3A and 4C on both sides of the centre parting and on both sides of the longitudinal plane of symmetry M, both plates 61, 62 of the measuring body 60 are provided with in this example a total of eight carrier strips 71-78 extending transverse to the centre line S. Each carrier strip 71-78 is provided with a series of in this example twelve electric strain gauges 80. The measuring body 60 is provided with a carrier plate 67 that is connected to the vertical steel plate 61. The carrier plate 67 carries a printed circuit-board 81 having an electronic circuit that is electrically connected to each of the strain gauges 80.

The vertical plate 62 has also been provided with a unit 82 having electronic inclinometers and accelerometers that are electrically connected to the printed circuit-board 81. The printed circuit-board 81 is furthermore connected to a partially external pressure sensor 90 for measuring the water pressure. The printed circuit-board 81 is furthermore connected to a power cable 83 which by means of a pull relief 84 is inserted in the connecting pen 54 and which is connected to a battery housing that is not further shown on the shank 30. The printed circuit-board 81 is furthermore connected to a communication cable 85 which by means of a pull relief 86 is inserted into the end cap 56 and which is connected to an acoustic modem 87 that is known per se for acoustic transfer 88 of data under water. Said pull relief 86 is shielded by means of a case 89 that has been welded thereon. The electronic circuit on the printed circuit-board 81 is adapted for receiving, processing and transmitting electronic signals from the strain gauges 80, the inclinometers, the accelerometers and the pressure sensor 90. Due to the fixed orientation of the measuring body 60 with respect to the shank 30 the position of the anchor 1 with respect to a notional horizontal plane H and a notional vertical plane V can be determined, and thus the pitch and roll of the anchor 1. By means of the pressure sensor 90 the height of the water column above the connecting pen 54 and thus the depth of the anchor 1 with respect to the water line can be determined.

Figure 2 shows the anchor 1 during introduction in a submarine 3 anchoring ground 2, such as a seabed, from an installation ship located on the water line 5 and which is not further shown. The installation ship is provided with an acoustic modem that is not further shown for communication with the modem 87 at the anchor 1, which modem is coupled to a calculation and data processing unit. In a preceding step the anchor 1 has been placed from the installation ship on the anchoring ground 2 at depth D, with the tips 14 of the fluke 10 in the direction of the installation ship. The acoustic modem 87 and the communication cable 85 are then still in the water 3. Subsequently the installation ship has exerted a force F on the anchor 1 via the anchor line 4, as a result of which the anchor 1 has gone through a penetration path J down to a certain depth E in the anchoring ground 2.

During going through the penetration path J the end ears 35 of the shank 30 on the one hand and the eyes 52 of the bow shackle 51 on the other hand have exerted bending forces and bending moments on the connecting pen 54, wherein the related deformations have been applied on the measuring body 60. This takes place within the elastic range of the connecting pen 54 and the measuring body 60. Subsequent thereto the strain gauges 80 have been subjected to deformations via the plates 61, 62 of the measuring body 60, for instance per plate 61, 62 according to a distribution Q such as shown with vectors in figure 4C. The deformations of the individual strain gauges 80 and the data of the inclinometers and the accelerometers have been registered by the electronic circuit and directly communicated to the calculation and data processing unit on the installation ship. The calculation and data processing unit is able to derive the penetration path J from these data, and the related action of forces F1-F3 between the anchor 1 and the anchor line 4, for instance by interpolation of known test data, or by a finite element analysis. The force may for instance be horizontally oriented as shown with force F1, upwardly inclined at angles A, B as shown with force F2 or downwardly inclined at angle K, N. On the basis of the magnitude and the direction of the forces F1-F3 in relation to the penetration path J it can be determined with acceptable reliability whether the anchor 1 has set properly and whether it will be able to provide the specified holding power.

In the anchor 1 described, the connecting pen 54 forms the coupling between the bow shackle 51 and the fluke 10. Alternatively the connecting pen 54 takes the place of one of the pins 18, 19 with which the shank 30 is coupled to the fluke 10.

The anchor 1 described is provided with a fluke 10 and a shank 30 that is fixedly connected thereto and which ensures the connection between the fluke 10 and the anchor line 4. Alternatively the fluke 10 may by means of the securing lips 16, 17 be connected to pulling cables which come together at the location of the measuring coupling 50.

The above description is included to illustrate the operation of preferred embodiments of the invention and not to limit the scope of the invention. Starting from the above explanation many variations that fall within the present invention as claimed will be evident to an expert.

## Claims

1. Anchor (1) comprising a fluke (10) which can be introduced into an anchoring ground (2) in accordance with a direction of penetration (P) by exerting a pulling force (F) on an anchor line (4) connected to the anchor, and a measuring coupling (50) which during introduction of the fluke forms part of a force transfer between the anchor line and the fluke, wherein the measuring coupling (50) is provided with a first coupling member (31) that is connected to the fluke, a second coupling member (52) that is connected to the anchor line (4), a hollow coupling bar (54) that couples the coupling members to one another, wherein the coupling members in the longitudinal direction of the bar engage onto the coupling bar at different places in order to be able to deform it, and a measuring body (60) extending through the hollow coupling bar and which at least at its ends (63, 65) is connected to the coupling bar in order to deform along with the coupling bar, wherein the measuring body (60) is provided with deformation sensors (80) for recording deformation parameters of the measuring body.

2. Anchor (1) according to claim 1, wherein the measuring body (60) is fixedly connected to the coupling bar (54).

3. Anchor (1) according to claim 1 or 2, wherein the measuring body (60) extends freely through the coupling bar (54) between the ends connected to the coupling bar.

4. Anchor (1) according to any one of the preceding claims, wherein the measuring body (60) is narrower over its length between the ends (63, 65) than it is at its ends (63, 65).

5. Anchor (1) according to any one of the preceding claims, wherein the measuring body (60) comprises at least one elongated strip or plate (61, 62).

6. Anchor (1) according to any one of the preceding claims, wherein the measuring body (60) comprises at least two elongated strips or plates (61, 62) which over their length are positioned substantially transverse to each other.

7. Anchor (1) according to claim 6, wherein the strips (61, 62) are fixedly connected to one another, and/or wherein the strips (61, 62) in cross-section form a cross.

8. Anchor (1) according to any one of the preceding claims, wherein the measuring body (60) is made of metal, preferably of steel.

9. Anchor (1) according to any one of the preceding claims, wherein the deformation sensors (80) are grouped in at least one straight series extending substantially transverse to the longitudinal direction of the measuring body (60), wherein the deformation sensors (80) are preferably grouped in several straight series distributed over the measuring body (60) in the longitudinal direction of the measuring body.

10. Anchor (1) according to any one of the preceding claims, wherein the measuring coupling (50) comprises two first coupling members (31) that spaced apart from each other, engage onto the coupling bar (54) and/or wherein the measuring coupling (50) comprises two second coupling members (52) that spaced apart from each other, engage onto the coupling bar (54), wherein the two first coupling members (31) or the two second coupling members (52) within the measuring coupling (50) preferably form the outermost engagement onto the coupling bar (54).

11. Anchor (1) according to any one of the preceding claims, comprising a shank (30) that is fixedly connected to the fluke, wherein the first coupling member (31) forms a part of the shank, wherein the first coupling member (31) is preferably situated at the end of the shank that faces away from the fluke (10), wherein the coupling bar (54) is preferably rotation-fixedly connected to the shank (30).

12. Anchor (1) according to any one of the preceding claims, wherein the second coupling member (52) forms the end of an anchor line coupling (51) connected to the anchor line (4).

13. Anchor (1) according to any one of the preceding claims, wherein the coupling bar (54) in its longitudinal direction extends transverse to the longitudinal plane of symmetry (M) of the anchor.

14. Anchor (1) according to any one of the preceding claims, wherein the measuring coupling (80) is provided with an inclinometer that is accommodated in the coupling bar (54), wherein the inclinometer is preferably fixedly connected to the measuring body (60).

15. Anchor (1) according to any one of the preceding claims, wherein the measuring coupling (50) is provided with an accelerometer that is accommodated in the coupling bar (54), wherein the accelerometer is preferably fixedly connected to the measuring body (60).

## Patentansprüche

1. Anker (1) mit
einer Flunke (10), die, durch Ausüben einer Zugkraft (F) an einer Ankerlinie (4), die mit dem Anker verbunden ist, in Übereinstimmung mit einer Eindringrichtung (P) in einen Ankergrund (2) eingebracht werden kann, und
einem Messverbindungsstück (50), das während des Einbringens der Flunke (10) einen Teil der Kraftübertragung zwischen der Ankerlinie und der Flunke bildet, wobei das Messverbindungsstück (50) mit einem ersten Verbindungsstückelement (31), das mit der Flunke verbunden ist, und einem zweiten Verbindungsstückelement (52), das mit der Ankerlinie (4) verbunden ist, versehen ist,
einer hohlen Verbindungsstückstange (54), welche die Verbindungsstückelemente miteinander verbindet, wobei die Verbindungsstückelemente entlang der Längsrichtung der Stange an unterschiedlichen Positionen an der Verbindungsstückstange im Eingriff sind, um diese verformen zu können, und
einem Messkörper (60), der sich durch die hohle Verbindungsstückstange erstreckt und der zumindest an seinen Enden (63, 65) mit der Verbindungsstückstange verbunden ist, um sich zusammen mit der Verbindungsstückstange zu verformen, wobei der Messkörper (60) mit Verformungssensoren (80) versehen ist, um Verformungsparameter des Messkörpers aufzuzeichnen.

2. Anker (1) gemäß Anspruch 1, bei dem der Messkörper (60) starr mit der Verbindungsstückstange (54) verbunden ist.

3. Anker (1) gemäß Anspruch 1 oder 2, bei dem sich der Messkörper (60) frei durch die Verbindungsstückstange (54), zwischen den mit der Verbindungsstückstange verbundenen Enden, erstreckt.

4. Anker (1) gemäß einem der vorangegangenen Ansprüche, bei dem der Messkörper (60) über seine Länge zwischen den Enden (63, 65) schmaler als an seinen Enden (63, 65) ist.

5. Anker (1) gemäß einem der vorangegangenen Ansprüche, bei dem der Messkörper (60) mindestens einen gestreckten Streifen oder eine gestreckte Platte (61, 62) aufweist.

6. Anker (1) gemäß einem der vorangegangenen Ansprüche, bei dem der Messkörper (60) mindestens zwei gestreckte Streifen oder Platten (61, 62) aufweist, die über ihre Länge im Wesentlichen quer zueinander angeordnet sind.

7. Anker (1) gemäß Anspruch 6, bei dem die Streifen (61, 62) starr miteinander verbunden sind, und/oder wobei die Streifen (61, 62) im Querschnitt ein Kreuz bilden.

8. Anker (1) gemäß einem der vorangegangenen Ansprüche, bei dem der Messkörper (60) aus Metall, vorzugsweise aus Stahl, gefertigt ist.

9. Anker (1) gemäß einem der vorangegangenen Ansprüche, bei dem die Verformungssensoren (80) in mindestens einer geraden Reihe gruppiert sind, die sich im Wesentlichen quer zur Längsrichtung des Messkörpers (60) erstreckt, wobei die Verformungssensoren (80) bevorzugt in mehreren geraden Reihen gruppiert sind, die in der Längsrichtung des Messkörpers über den Messkörper (60) verteilt sind.

10. Anker (1) gemäß einem der vorangegangenen Ansprüche, bei dem das Messverbindungsstück (50) zwei erste Verbindungsstückelemente (31) aufweist, die zueinander beabstandet sind, mit der der Verbindungsstückstange (54) im Eingriff sind und/oder wobei das messende Verbindungsstück (50) zwei zweite Verbindungsstückelemente (52) aufweist, die zueinander beabstandet sind, mit der Verbindungsstückstange (54) im Eingriff sind, wobei die beiden ersten Verbindungsstückelemente (31) oder die beiden zweiten Verbindungsstückelemente (52) innerhalb des Messverbindungsstücks (50) bevorzugt den äußersten Eingriff mit der Verbindungsstückstange (54) bilden.

11. Anker (1) gemäß einem der vorangegangenen Ansprüche, der einen Ankerschaft (30), der starr mit der Flunke verbunden ist, aufweist, wobei das erste Verbindungsstückelement (31) einen Teil des Ankerschafts bildet, wobei das erste Verbindungsstückelement (31) bevorzugt an dem Ende des Ankerschafts, das von der Flunke (10) abgewandt ist, angeordnet ist, wobei die Verbindungsstückstange (54) bevorzugt drehfest mit dem Ankerschaft (30) verbunden ist.

12. Anker (1) gemäß einem der vorangegangenen Ansprüche, bei dem das zweite Verbindungsstückelement (52) das Ende eines Ankerlinienverbindungsstücks (51), das mit der Ankerlinie (4) verbunden ist, bildet.

13. Anker (1) gemäß einem der vorangegangenen Ansprüche, bei dem sich die Verbindungsstückstange (54) in ihrer Längsrichtung quer zu der longitudinalen Symmetrieebene (M) des Ankers, erstreckt.

14. Anker (1) gemäß einem der vorangegangenen Ansprüche, bei dem das Messverbindungsstück (80) mit einem Neigungsmesser, der in der Verbindungsstückstange (54) aufgenommen ist, versehen ist, wobei der Neigungsmesser bevorzugt starr mit dem Messkörper (60) verbunden ist.

15. Anker (1) gemäß einem der vorangegangenen Ansprüche, bei dem das Messverbindungsstück (50) mit einem Beschleunigungsmesser, der in der Verbindungsstückstange (54) aufgenommen ist, versehen ist, wobei der Beschleunigungsmesser bevorzugt starr mit dem Messkörper (60) verbunden ist.

## Revendications

1. Ancre (1) comprenant une patte (10) qui peut être introduite dans un sol d'ancrage (2) en conformité avec une direction de pénétration (P) en exerçant une force de traction (F) sur une ligne d'ancre (4) raccordée à l'ancre, et un système de couplage de mesure (50) qui pendant l'introduction de la patte fait partie d'un transfert de force entre la ligne d'ancre et la patte, dans laquelle le système de couplage de mesure (50) est doté d'un premier organe de couplage (31) qui est raccordé à la patte, d'un second organe de couplage (52) qui est raccordé à la ligne d'ancre (4), une barre de couplage creuse (54) qui couple les organes de couplage l'un à l'autre, dans laquelle les organes de couplage dans la direction longitudinale de la barre se mettent en prise sur la barre de couplage en différents endroits afin d'être capables de la déformer, et un corps de mesure (60) s'étendant à travers la barre de couplage creuse et qui au moins à ses extrémités (63, 65) est raccordé à la barre de couplage afin de se déformer avec la barre de couplage, dans laquelle le corps de mesure (60) est doté de capteurs de déformation (80) permettant d'enregistrer des paramètres de déformation du corps de mesure.

2. Ancre (1) selon la revendication 1, dans laquelle le corps de mesure (60) est raccordé fixement à la barre de couplage (54).

3. Ancre (1) selon la revendication 1 ou 2, dans laquelle le corps de mesure (60) s'étend librement à travers la barre de couplage (54) entre les extrémités raccordées à la barre de couplage.

4. Ancre (1) selon l'une quelconque des revendications précédentes, dans laquelle le corps de mesure (60) est plus étroit sur sa longueur entre les extrémités (63, 65) qu'il ne l'est à ses extrémités (63, 65).

5. Ancre (1) selon l'une quelconque des revendications précédentes, dans laquelle le corps de mesure (60) comprend au moins une bande ou plaque allongée (61, 62).

6. Ancre (1) selon l'une quelconque des revendications précédentes, dans laquelle le corps de mesure (60) comprend au moins deux bandes ou plaques allongées (61, 62) qui sont positionnées sur leur longueur de façon sensiblement transversale l'une par rapport à l'autre.

7. Ancre (1) selon la revendication 6, dans laquelle les bandes (61, 62) sont raccordées fixement l'une par rapport à l'autre et/ou dans laquelle les bandes (61, 62) forment en section une croix.

8. Ancre (1) selon l'une quelconque des revendications précédentes, dans laquelle le corps de mesure (60) est constitué de métal, de préférence d'acier.

9. Ancre (1) selon l'une quelconque des revendications précédentes, dans laquelle les capteurs de déformation (80) sont groupés en au moins une série droite s'étendant de façon sensiblement transversale à la direction longitudinale du corps de mesure (60), dans laquelle les capteurs de déformation (80) sont de préférence groupés en plusieurs séries droites réparties sur le corps de mesure (60) dans la direction longitudinale du corps de mesure.

10. Ancre (1) selon l'une quelconque des revendications précédentes, dans laquelle le système de couplage de mesure (50) comprend deux premiers organes de couplage (31) qui sont espacés l'un de l'autre, se mettant en prise sur la barre de couplage (54) et/ou dans laquelle le système de couplage de mesure (50) comprend deux seconds organes de couplage (52) qui sont espacés l'un de l'autre, se mettant en prise sur la barre de couplage (54), dans laquelle les deux premiers organes de couplage (31) ou les deux seconds organes de couplage (52) dans le système de couplage de mesure (50) forment de préférence la mise en prise la plus externe sur la barre de couplage (54).

11. Ancre (1) selon l'une quelconque des revendications précédentes, comprenant une verge (30) qui est raccordée fixement à la patte, dans laquelle le premier organe de couplage (31) fait partie de la verge, dans laquelle le premier organe de couplage (31) est de préférence situé à l'extrémité de la verge qui est orientée en éloignement de la patte (10), dans laquelle la barre de couplage (54) est de préférence raccordée fixement en rotation à la verge (30).

12. Ancre (1) selon l'une quelconque des revendications précédentes, dans laquelle le second organe de couplage (52) forme l'extrémité d'un couplage de ligne d'ancre (51) raccordé à la ligne d'ancre (4).

13. Ancre (1) selon l'une quelconque des revendications précédentes, dans laquelle la barre de couplage (54) dans sa direction longitudinale s'étend de façon transversale au plan longitudinal de symétrie (M) de l'ancre,

14. Ancre (1) selon l'une quelconque des revendications précédentes, dans laquelle le système de couplage de mesure (80) est doté d'un inclinomètre qui est logé dans la barre de couplage (54), dans laquelle l'inclinomètre est de préférence raccordé fixement au corps de mesure (60).

15. Ancre (1) selon l'une quelconque des revendications précédentes, dans laquelle le système de couplage de mesure (50) est doté d'un accéléromètre qui est logé dans la barre de couplage (54), dans laquelle l'accéléromètre est de préférence raccordé fixement au corps de mesure (60).
